# EUROPEAN PATENT APPLICATION

(11) **EP 4 686 498 A1**
(43) Date of publication of application: **04.02.2026**
(21) Application number: 24192048.7
(22) Date of filing: 31.07.2024
(51) Int. Cl.: A63F 13/52, A63F 13/56, A63F 13/65, G06V 20/00, G06V 20/52, G06V 40/10

(54) **METHOD AND SYSTEM FOR EFFICIENTLY RENDERING ONE OR MORE SCENES IN A COMPUTER SIMULATED ENVIRONMENT**

(71) Applicant: Siemens Aktiengesellschaft, 80333 München (DE)
(72) Inventor: DEB, Pallav Kumar, 781028 Guwahati, Assam (IN); SINGH, Himanshu Kumar, 560100 Bangalore (IN)
(74) Representative: HKW Intellectual Property PartG mbB

(57) **Abstract**

The present invention provides a system (100), apparatus (110) and method (400) for efficiently rendering one or more scenes in a computer simulated environment from first site to second site in an industrial environment. The method comprises receiving, by a processing unit (202), visual data from data acquisition devices (102) arranged at first site. The method comprises identifying real-world scene from industrial environment in real-time frame-by-frame. The real-world scene is identified using machine learning models on visual data. The method comprises converting each frame identified from scene into metadata with predefined schema and transmitting the metadata to the second site. The method comprises extracting relevant description from metadata at second site in order to render scene frame-by-frame in computer simulated environment. The method comprises fetching avatars from database related to extracted entities in frame based on extracted metadata description. The method comprises rendering scenes in computer simulated environment at second site based on fetched avatars from database.

## Description

The present invention generally relates to computer simulated environments, and more specifically to a method and system for efficiently rendering one or more scenes in a computer simulated environment.

Industrial environments include plurality of machines or assets in an automated factory, or IoT devices interacting with one another. Industrial environments thus often include multiple interconnected components in signal communication with each other, either directly or across a network. An emerging concept complementing the rapid industrial development is "the industrial metaverse". The industrial metaverse is a next generation of fully immersive three-dimensional collaborative space that integrates multiple technical directions such as digital twin, internet of things, industrial internet, augmented reality, virtual reality, mixed reality, and the like. Metaverse is a virtual universe with shared, 3D virtual spaces where virtual assets can be owned, placed and interacted with. It also allows different users to interact with each other in the collaborative environment. These virtual assets can be simple entities like chair or table, or complex entities like industrial machinery.

For this purpose, a typical IIoT (Industrial Internet of Things) solution in a metaverse would include capturing the real-world data and then rendering the same in the industrial environment in a photorealistic manner to provide an immersive experience to the user. In an industrial environment, such as for manufacturing plants or factory floor, there are numerous machines and corresponding standard operating procedures that the operators/workers need to follow for optimum functioning of the industrial environment. The metaverse simulations can be used in such cases to schedule and train workers/operators using photorealistic rendering of scenarios and immersing them in a virtual world to create real-world experiences. For example, a manufacturing plant hosts a digital workflow for repairing a machine in a VR space. Employees log into the virtual space via VR, meet in a shared space via 3D avatars, and communicate to repair the machine together.

However, recreation of real-world objects along with their motion in real-time in a virtual environment requires resource-rich information along with adequate computing power to process and make inferences. Changes in the actual environment should be readily visible in the virtual environment in near real-time to avoid discounting critical decision windows. In the current scenarios, solutions to the above-mentioned issues are addressed using high-speed networking (5G/6G) and high-configuration GPU servers. It should also be understood that such high-speed networking and high configuration GPU servers are resource and energy intensive and thereby increasing carbon footprint of such virtual environments. Furthermore, even with such state-of-art solutions, lags, delays, and inconsistencies are observed when rendering objects in the metaverse. Furthermore, such delays and lags are even more prominent when there are multiple participants in the scene to be rendered. It should be noted that this problem becomes more noticeable when there are network interruptions or intermittent connectivity during transmission. Applications that typically involve sending large files in real-time are impacted the most as compared to others due to packet drops and consequent delays. For instance, consider a factory floor surveillance system, with the increasing number of cameras, the bandwidth required to accommodate the transmission of all the frames together is challenging. Therefore, when large files are transmitted especially in scenarios of intermittent connectivity, the animations start appearing fragmented, thereby significantly degrading the quality of experience of the users in the virtual environment.

In the light of the above, there exists a need to provide a system and method for efficiently rendering one or more scenes in the computer simulated environment by reconstructing the scene at a defined location while optimizing bandwidth usage.

Therefore, the object of the invention is to provide a system and method for efficiently rendering one or more scenes in a computer simulated environment from a first site to a second site in an industrial environment. The method comprises receiving, by a processing unit, visual data from one or more data acquisition devices arranged at a first site, wherein the data acquisition devices are configured to acquire data pertaining to one or more entities interacting in an industrial environment. The method comprises identifying, by the processing unit, a real-world scene from the industrial environment in real-time frame-by-frame, wherein the real-world scene is identified using one or more machine learning models on the received visual data. The method comprises converting, by the processing unit, each frame identified from scene into metadata with a predefined schema and transmitting the metadata to the second site. The method comprises extracting, by the processing unit, relevant description from the metadata at the second site in order to render the scene frame-by-frame in the computer simulated environment. The method comprises fetching, by the processing unit, one or more avatars from a database that are related to the extracted one or more elements in the frame based on the extracted metadata description. The method comprises rendering, by the processing unit, the one or more scenes in the computer simulated environment at a second site based on the fetched avatars from the database.

Throughout the present disclosure, the term "industrial environment" may refer to plurality of industrial assets connected with each other to achieve a function. The industrial environment may be comprised of industrial assets such as industrial machines, industrial devices, industrial controllers, and so forth.

The term "one or more entities" refers to specific objects, elements, components, or subjects in a facility. In an example, the facility is an industrial environment, the one or more entities maybe assets, devices, machinery, robots, equipment, assembly lines, conveyors, motors, pumps, compressors, or any other mechanical, electrical, or electronic equipment, workers, operators, supervisors, in the industrial environment. In an example, the facility is an office building, the one or more entities maybe desks, chairs, tables, cabinets, shelves, partitions, workstations, conference room furniture, lighting fixtures, or any other furniture or fixtures typically found in an office environment. Further, the one or more entities maybe equipment, or systems used in office operations, including computers, printers, scanners, copiers, telephones, projectors, audio-visual systems, networking devices, or any other technological or electronic devices commonly used in an office setting. In another example, the facility is an airplane under maintenance, the one or more entities maybe physical framework, body, or fuselage of the airplane, including wings, tail sections, landing gear, engine nacelles, cockpit, cabin, doors, windows, and any other structural components that contribute to the overall form and integrity of the aircraft, jet engines, turboprops, propellers, fuel systems, exhaust systems, thrust reversers, or any other elements involved in generating and controlling the aircraft's propulsion, electronic systems and instruments used for aircraft navigation, communication, monitoring, and control, including flight control systems, flight management systems, autopilot systems, navigation systems, communication systems, radar systems, or any other electronic devices or subsystems installed on the aircraft, seating arrangements, overhead compartments, lavatories, galley equipment, lighting systems, entertainment systems, safety equipment, passengers, pilots, crew members and so forth.

Throughout the present disclosure, the term "one or more data acquisition devices" refer to any electronic device configured for capturing, acquiring, and transmitting data from the industrial environment to the apparatus. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus for further processing. In an embodiment, the visual data comprises at least one of a static image data and dynamic image data.

Throughout the present disclosure, the term "one or more machine learning algorithms" refer to computer vision machine learning models for analyzing one or more scenes acquired from the data acquisition devices. The one or more machine learning models are computational algorithms that leverage statistical techniques and data to automatically learn patterns, associations, or representations from input data, such as visual data from data acquisition devices. The model is designed to generalize and make predictions or decisions without explicit programming, based on the knowledge extracted from the training data. The model can be trained, validated, and tested using a dataset that comprises input features and corresponding target labels or outcomes. The machine learning model can take various forms, including but not limited to:
Supervised Learning Models: These models are trained with labeled data, where the input features are associated with known target labels. The model learns to map input data to output labels, enabling prediction or classification tasks for unseen data.

Unsupervised Learning Models: These models are trained with unlabeled data, aiming to identify hidden patterns, clusters, or structures in the input data without explicit target labels. They are used for tasks like clustering, anomaly detection, or dimensionality reduction.

Semi-Supervised Learning Models: These models utilize a combination of labeled and unlabeled data during training, leveraging the information from both labeled and unlabeled samples to improve performance.

Reinforcement Learning Models: These models learn through interactions with an environment, receiving feedback in the form of rewards or penalties based on actions taken. The model optimizes its behavior over time to achieve specific goals or maximize cumulative rewards.

The machine learning model is capable of generalizing its learning to new, unseen data, allowing it to make accurate predictions, classifications, or decisions in real-world scenarios.

Throughout the present disclosure, the term "computer simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of one or more animated scenes being rendered corresponding to the plurality of entities interacting in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be one or more entities being rendered in the computer simulated collaborative environment or metaverse.

The metaverse can be realized by a hosting environment. The hosting environment can be for example be implemented as a cloud environment, an edge-cloud environment and/or on specific devices, e.g., mobile devices.

Throughout the present disclosure, the term "one or more data acquisition devices" refer to any electronic device configured for capturing, acquiring, and transmitting data from the industrial environment to the apparatus. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus for further processing. In an embodiment, the visual data comprises at least one of a static image data and dynamic image data.

According to an embodiment, the predefined schema of the metadata comprises a list objects/elements/entities comprising at least one of: name of objects, type of objects, position coordinates of the objects, coordinates of joints of the objects, temporal activity of the objects, spatial placement of the objects, and relative placement of the objects with respect to other objects.

According to an embodiment, the relevant description from the metadata comprises at least one of: name of objects, type of objects, position coordinates of the objects, coordinates of joints of the objects, temporal activity of the objects, spatial placement of the objects, and relative placement of the objects with respect to other objects.

According to an embodiment, the method of fetching the one or more avatars from the database comprises fetching the one or more avatars from a local database based on a comparison of the extracted information from the metadata with the one or more avatars stored in the local database, when a comparison value is above a threshold. Further, the method comprises fetching the one or more avatars from a public database based on a comparison of the extracted information from the metadata with the one or more avatars stored in the local database, when a comparison value is below a threshold.

According to an embodiment, the method of rendering the one or more scenes in the computer simulated environment comprises defining orientation of each of the one or more avatars based on the metadata description.

According to an embodiment, the method of rendering the one or more scenes in the computer simulated environment comprises improving aspect ratio of the one or more avatars as per requirements of the user.

According to an embodiment, the method of rendering the one or more scenes comprises generating an animation of the one or more avatars based on the extracted metadata description using a generative artificial neural network.

According to an embodiment, the method of rendering the one or more scenes further comprises determining a future state of avatars in the identified scene based on the present state of objects as extracted from the received metadata at the second site, wherein the future state of avatars is obtained based on a predefined activity flow in the industrial environment. Further, the method comprises generating an animation of the one or more avatars for the future state using the generative artificial neural network. Further, the method comprises rendering the one or more scenes based on the generated animation.

The object of the present invention is also achieved by an apparatus efficiently rendering one or more scenes in a computer simulated environment from a first site to a second site in an industrial environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for efficiently rendering one or more scenes in a computer simulated environment from a first site to a second site in an industrial environment. The system comprises one or more data acquisition devices arranged at a first site. The one or more data acquisition devices are configured for acquiring visual data of one or more entities from the first site. The system comprises a computer simulated environment configured for rendering the visual data received from the one or more data acquisition devices at a second site. The system comprises an apparatus as aforementioned communicatively coupled to the industrial environment, the computer simulated environment and the database via a communication network. The apparatus is configured for efficiently rendering one or more scenes in a computer simulated environment according to the aforementioned method steps.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
- FIG 1: is a block diagram of a system for efficiently rendering one or more scenes in a computer simulated environment, according to an embodiment of the present invention;
- FIG 2: is a block diagram of an exemplary apparatus for efficiently rendering one or more scenes in a computer simulated environment, according to an embodiment of the present invention;
- FIG 3: is a flowchart depicting steps of a method for efficiently rendering one or more scenes in a computer simulated environment, according to an embodiment of the present invention;
- FIG 4: is an exemplary method workflow for efficiently rendering one or more scenes in a computer simulated environment, according to an embodiment of the present invention; and
- FIG 5: is a depiction of posture estimation of a person holding objects, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

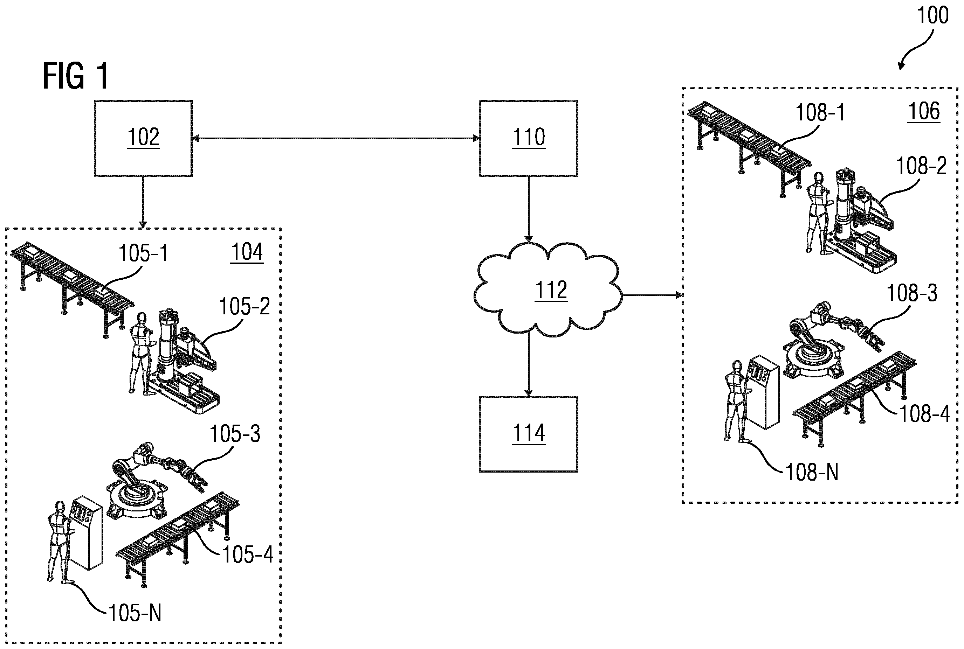

FIG 1 is a block diagram of a system 100 for efficiently rendering one or more scenes in a computer simulated environment, according to an embodiment of the present invention. The system 100 comprises one or more data acquisition devices 102 arranged at a first site in an industrial environment 104 comprising one or more entities 105-1 to 105-N as shown. The system 100 comprises a computer simulated environment 106 for rendering one or more avatars 108-1 to 108-N recreated from visual data received from the one or data acquisition devices 102 at a second site. The system 100 comprises an apparatus 110 communicatively coupled with the one or more data acquisitions devices 102 and the computer simulated environment 106 via a communication network 112. Furthermore, the system 100 comprises a database 114 communicatively coupled to the apparatus 110 via the communication network 112.

The industrial environment 104 comprises plurality of industrial assets connected with each other to achieve a function. The industrial environment may be comprised of industrial assets such as industrial machines, industrial devices, industrial controllers, and so forth. The industrial environment 104 comprises the "one or more entities" 105-1 to 105-N interacting in the industrial environment. The one or more entities 105-1 to 105-N are any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. The one or more entities may also include automated systems such as automated robots, semi-automated robots, remote-controlled robots, robotic arms, etc. that are employed in the industrial environment to perform an operation or task. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. The one or more entities also refer to personnels employed in the industrial environment who perform one or more actions to achieve an objective or output in the industrial environment.

The computer simulated environment 106 is a three-dimensional (3D) representation of a real or physical world. It can be understood as a virtual world representing one or more entities 105-1 to 105-N of the real-world such as assets, machines, robots, operators, workers, operators etc. The one or more entities 105-1 to 105-N are represented as one or more avatars 108-1 to 108-N in the computer simulated environment 106. The computer-simulated environment 106 is accessible by a user, i.e., it is accessible from the real/physical world. In particular, the computer-simulated environment 106 can be understood as the "metaverse". It is also possible to interact with the computer-simulated environment 106, i.e., to influence or use processes, components and/or functions in the computer-simulated environment 106. The user or the avatar may interact with the objects rendered in the metaverse.

For example, it is possible that a user can access the computer-simulated environment 106 via an interface, e.g., a virtual reality (VR) or augmented reality (AR) interface. For the purpose of this invention, the metaverse is comprised of one or more animated scenes being rendered corresponding to the plurality of entities interacting in the industrial environment. The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The metaverse can be realized by a hosting environment. The hosting environment can be for example be implemented as a cloud environment, an edge-cloud environment and/or on specific devices, e.g., mobile devices.

The one or more entities 105-1 to 105-N maybe assets, devices, machinery, robots, equipment, workers, operators, supervisors in the industrial environment. The one or more entities 105-1 to 105-N are captured using one or more data acquisition devices 102 and then rendered on the computer simulated environment 106. The "one or more data acquisition devices" 102 refer to any electronic device configured for capturing, acquiring, and transmitting data from the industrial environment to the apparatus. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus for further processing. In an embodiment, the visual data comprises at least one of a static image data and dynamic image data.

For the purpose of this invention, the data acquisition devices 102 are arranged at a first site in the industrial environment 104 to acquire visual data and then recreate the scene at a second site in the computer simulated environment 106. The term "first site" and "second site" refer to geographically separate regions and the visual data is transmitted from the first site to the second site for surveillance purposes.

Further the system comprises database 114 configured for storing one or more avatars similar to one or more entities in the industrial environment. The database 114 may be a structured or non-structured collection of data or information stored in a computer-readable format. The database 114 comprises one or more tables, each consisting of rows and columns, where data is organized, stored, and managed. The data within the database 114 can include text, numbers, images, audio, video, or any other form of electronic data. The database 114 is designed to efficiently store, retrieve, and manipulate large volumes of data, enabling rapid access and retrieval of information for various applications. It provides a centralized repository for organizing and managing data, facilitating data integrity, consistency, and security. The data within the database 114 can be accessed, modified, or queried through a database management system (DBMS), which provides a set of software tools and interfaces to interact with the database. The DBMS allows users or applications to perform operations such as inserting, updating, deleting, or searching for data within public databases. The database 114 is a database which may be of various types, including but not limited to relational databases, NoSQL databases, distributed databases, in-memory databases.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 112, for example, the internet. The cloud computing environment provides on-demand network access to a shared pool of the configurable computing physical and logical resources. The apparatus 110 includes a module for efficiently rendering one or more scenes in the computer simulated environment 106.

Particularly, the system 100 comprises a cloud computing device configured for efficiently rendering one or more scenes in a computer simulated environment from a first site to a second site in an industrial environment. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

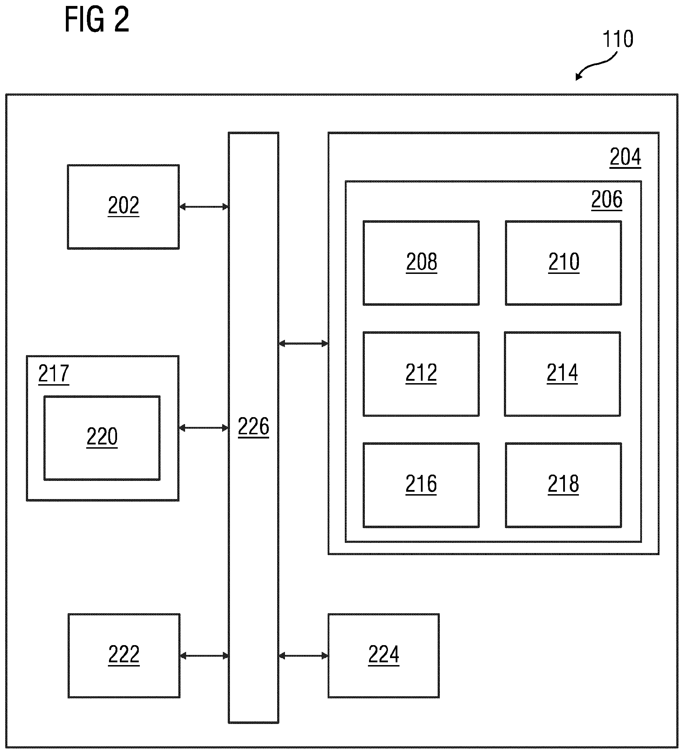

FIG 2 is a block diagram of an exemplary apparatus 110 for efficiently rendering one or more scenes in a computer simulated environment from a first site to a second site in an industrial environment, according to an embodiment of the present invention. In an exemplary embodiment, the apparatus 110 is communicatively coupled to the data acquisition device 102 and the computer simulated environment 106. The apparatus 110 receives visual data from the data acquisition devices 102, processes it and then transmits it to the computer simulated environment 106 for rendering the one or more avatars 108-1 to 108-N.

The apparatus 110 may be a personal computer, a laptop computer, a tablet, a server, a virtual machine, and the like. The apparatus 110 includes a processing unit 202, a memory 204 comprising a module 206, a storage unit 217 comprising a database 220, an input unit 222, an output unit 224 and a bus 226.

The processing unit 202 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 202 may also include embedded controllers, such as generic or programmable logic devices or arrays, application specific integrated circuits, single-chip computers, and the like.

The memory 204 may be non-transitory volatile memory and/or non-volatile memory. The memory 204 may be coupled for communication with the processing unit 202, such as being a computer-readable storage medium. The processing unit 202 may execute instructions and/or code stored in the memory 204. A variety of computer-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 204 includes the module 206 stored in the form of machine-readable instructions on any of the above-mentioned storage media and may be in communication to and executed by the processing unit 202. When the machine-readable instructions are executed by the processing unit 202, the module 206 causes the processing unit 202 to efficiently render one or more scenes in a computer simulated environment.

The module 206 further comprises a data acquisition module 208, a scene identification module 210, a metadata generation module 212, a description extraction module 214, an avatar fetching module 216, and a rendering module 218.

The data acquisition module 208 is configured for acquiring visual data from the industrial environment. The data acquisition module 208 is configured for acquiring data pertaining to the one or more entities 105-1 to 105-N interacting in the industrial environment. The data acquisition module 208 is configured for acquiring data in one or more formats that may comprises at least one of a static image data, dynamic image data, signal data and acoustic data. The data acquisition module 208 is configured for pre-processing of data received from the one or more data acquisition devices. The data acquisition module 208 is configured for acquiring visual data from the data acquisition devices such as image sensors, camera modules, digital cameras, surveillance cameras, aerial imaging devices, 3D imaging devices, thermal imaging devices, wearable cameras and the like.

The scene identification module 210 is configured for identifying a real-world scene from the industrial environment frame-by frame in real-time. The scene identification module 210 is configured for identifying the scene using one or more machine learning models on the visual data received from the data acquisition module 208. The scene identification module 210 is configured for preprocessing the visual data to enhance the quality, reduce noise, or normalize the data for better output. Further, the scene identification module 210 is configured for extracting relevant features such as visual descriptors including color, texture, shape, edges or key points. These features are derived to represent distinctive characteristics of objects, scenes, or patterns within the images. The scene identification module 310 is configured for analyze the extracted features and then identifying objects or elements within it. Further, the scene identification module 210 performs object detection, semantic segmentation, scene classification and depth estimation using the one or more machine learning models for respective tasks in scene identification. A further capability of the scene identification module 210 is to understand the real-world and classify the one or more entities in the scene as "objects" and "personnels" in the identified scene.

The metadata generation module 212 is configured for converting each frame identified from scene into metadata with a predefined schema. The metadata generation module 212 is configured for generating metadata from visual data in a predefined schema for transmitting the visual data from the first site to the second site.

The description generation module 214 is configured for extracting relevant description from the metadata at the second site in order to render the scene frame-by-frame in the computer simulated environment. The description generation module 214 is configured for decoding the metadata for defining descriptions for recreating the scene at the second site.

The avatar fetching module 216 is configured for one or more avatars from a database that are related to the extracted one or more entities in the frame based on the extracted metadata description. The avatar fetching module 216 is configured for comparing the identified one or more entities to avatars available in the database. The avatar fetching module 216 is configured for fetching the one or more avatars from a local database based on a comparison of the extracted information from the metadata with the one or more avatars stored in the local database, when a comparison value is above a threshold. The avatar fetching module 216 is configured for fetching the one or more avatars from a public database based on a comparison of the extracted information from the metadata with the one or more avatars stored in the local database, when a comparison value is below a threshold.

The rendering module 218 is configured for rendering the one or more scenes in the computer simulated environment at the second site based on the fetched avatars from the database. The rendering module 218 is configured for recreating the scene as received form the visual data based on the fetched one or more avatars and the activity identified form the scenes. The rendering module 218 is configured for improving aspect ratio of the one or more avatars as per requirements of the user. The rendering module 218 is configured for generating an animation of the one or more avatars based on the extracted metadata description using a generative artificial neural network.

The processing unit 202 is configured for performing all the functionality of the module 206. The processing unit 202 is configured to receiving visual data from one or more data acquisition devices arranged at the first site configured to acquire data pertaining to one or more entities interacting in an industrial environment. The processing unit 202 is configured to a real-world scene from the industrial environment in real-time frame-by-frame, wherein the real-world scene is identified using one or more machine learning models on the received visual data. The processing unit 202 is configured to convert each frame identified from scene into metadata with a predefined schema. The processing unit 202 is configured to extracting relevant description from the metadata at the second site in order to render the scene frame-by-frame in the computer simulated environment. The processing unit 202 is configured for fetching one or more avatars from a database that are related to the extracted one or more entities in the frame based on the extracted metadata description. The processing unit 202 is configured for rendering the one or more scenes in the computer simulated environment at the second site based on the fetched avatars from the database.

The storage unit 217 comprises the database 220 for storing one or more avatars similar to one or more entities in the industrial environment. The storage unit 217 and/or database 220 may be provided using various types of storage technologies, such as solid state drives, hard disk drives, flash memory, and may be stored in various formats, such as relational databases, non-relational databases, flat files, spreadsheets, and extended markup files, etc.

The input unit 222 may provide ports to receive input from input devices such as keypad, touch-sensitive display, camera (such as a camera receiving gesture-based inputs), etc. capable of receiving set of requirements transmitting visual data from the first site to the second site. The display unit 224 may provide ports to output data via output device with a graphical user interface for displaying one or more scenes in the computer simulated virtual environment. The bus 226 acts as interconnect between the processing unit 202, the memory 204, the storage unit 217, the input unit 222, and the display unit 224.

Those of ordinary skilled in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

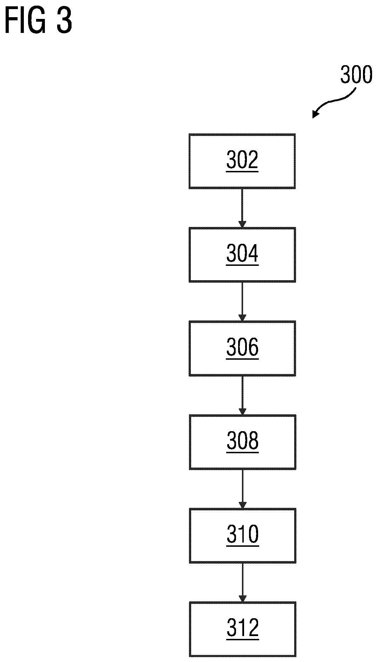

FIG 3 is a flowchart depicting steps of a method 300 for rendering one or more scenes in a computer simulated environment from a first site to a second site in an industrial environment, according to an embodiment of the present invention.

At step 302, visual data is received from one or more data acquisition devices 102 configured to acquire data pertaining to one or more entities interacting in the industrial environment. The visual data is acquired from the one or more data acquisition devices 102 arranged at the first site. The first site can be understood as one geographical area in the industrial environment.

The data acquisition devices 102 are electronic device configured for capturing, acquiring, and transmitting data from the industrial environment to the apparatus 110. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus 110 for further processing. In an embodiment, the visual data comprises at least one of a static image data and dynamic image data.

In an exemplary implementation, the data acquisition device 102 is a camera configured to capture still image data and/or video image data of the one or more entities in the facility. The term "camera" is understood to represent anything from one camera to a group of cameras arranged in a suitable configuration and outputting one or more video feeds of corresponding covered areas of the industrial environment. In an example, the data acquisition device may be located in the facility; for example, the cameras may be disposed throughout the industrial environment, mounted at various locations therein. In another example, the data acquisition device may be integrated in an aerial vehicle; for example, the cameras may be mounted on a body of a drone and pointing to various directions therefrom to cover different areas of the industrial environment or pointing at a particular entity based on a set of requirements.

In another exemplary implementation, the data acquisition devices 102 are surveillance cameras used for security and monitoring purposes. The surveillance cameras are designed to capture and record images or videos of specific areas or premises. Surveillance cameras may include features like night vision capabilities, motion detection, remote monitoring, and video analytics for intelligent video processing.

In another exemplary implementation, the data acquisition devices 102 are 3D imaging devices that capture depth information along with visual imagery, enabling the creation of three-dimensional representations of objects or scenes. Such devices may use technologies like structured light, time-of-flight, stereo vision, or LiDAR (Light Detection and Ranging) to acquire 3D data.

In another exemplary implementation, the data acquisition devices 102 are thermal imaging devices that capture infrared radiation emitted by assets in the factory floor to generate images based on temperature differences. Notably, this would provide additional information for quality scene generation during night or low-light conditions.

In another exemplary, implementation the data acquisition devices 102 are wearable cameras that may be arranged on body of the workers/operator in order to enable system to capture visual data of the assets, machines or an activity being performed from the perspective of the workers/operators on the factory floor. Advantageously, the system can switch between different views when rendering the one or more scenes providing a more immersive experience to an avatar in the metaverse.

It should be understood that the data acquisition devices 102 are configured to acquire visual data from the first site and transmit the same to be recreated at the second site in the metaverse. This technique is beneficial where there is intermittent connectivity between the first site and the second site and the transmission is required to be done in low bandwidth.

At step 304, the real-world scene comprising the one or more entities 105-1 to 105-N therein to be rendered are identified in real-time frame-by-frame in the industrial environment 104. The real-world scene maybe identified from the facility in real-time. The real-world scene is identified using one or more machine learning models on the received visual data. The real-world scene is identified using image processing techniques on the received visual data. The acquired visual data such as images and video data may undergo preprocessing steps to enhance the quality of the images or to remove noise or artifacts. Preprocessing techniques may include noise reduction, image filtering, color correction, or image enhancement algorithms. Further, the method involves extracting relevant features from the acquired images. Features can be various visual descriptors such as color, texture, shape, edges, or key points. These features are derived to represent distinctive characteristics of objects, scenes, or patterns within the images. The extracted features are then used to analyze the scene and identify one or more entities within it. Further, the entities can be identified using object detection algorithms within the scene, such as machines, conveyor belts, motors, levers, boxes, trolleys, robots, sensors, actuators, operators, workers, etc. This can be achieved using object recognition algorithms, machine learning techniques, or pattern matching approaches.

Further, the one or more scenes are identified from the visual data by classifying meaningful regions or segments based on their visual characteristics. This can involve classifying each pixel or region into different categories, such as asset area, fire assembly area, conveyor belt area, and the like. The method further comprises employing on or more machine learning algorithms for scene classification of the visual data. Assigning a label or category to the entire scene based on its overall content. The method includes training machine learning models to recognize and classify scenes based on predefined categories, such as machine area, storage area, packing area, electrical area, etc. It should be understood that once the one or more entities are identified and analyzed, the method comprises recognizing or classifying the scene based on the identified one or more entities in the scene. This can involve comparing the extracted features with a database of known scenes or using machine learning algorithms to match the scene characteristics with predefined scene categories. In an example, the method comprises performing object detection on the scene using a computer vision-based object detection model. This model will identify and locate different entities (objects) present in the scene. Object detection algorithms, such as YOLO (You Only Look Once), SSD (Single Shot Multibox Detector), or Faster R-CNN (Region-based Convolutional Neural Networks), can be utilized for this purpose.

Furthermore, activity being performed in the scene is also analyzed by the processing unit using one or more machine learning models such as activity recognition algorithms. An activity being performed is identified in the real-world scene acquired from the industrial environment using one or more machine learning models. The method involves extracting relevant features from the acquired data to capture the temporal and spatial characteristics of activities. Features can be derived from various modalities, including visual, audio, or sensor data. These features represent patterns, dynamics, or statistical properties that are informative for activity recognition. The extracted features are used to build models that represent different activities or actions of interest. Various algorithms and techniques can be employed, including but not limited to:
Machine learning algorithms: Training models using supervised learning techniques such as Support Vector Machines (SVM), Random Forests, Convolutional Neural Networks (CNN), Recurrent Neural Networks (RNN), or other suitable classifiers. These models learn to recognize patterns and make predictions based on labeled training data.

Deep learning architectures: Utilizing deep neural networks to automatically learn hierarchical representations of features and capture complex temporal dynamics. This can involve architectures such as Long Short-Term Memory (LSTM), Convolutional Neural Networks (CNN), or Transformers, which excel at modeling sequential or spatial-temporal data.

Rule-based approaches: Defining sets of rules or logical conditions that specify patterns or constraints indicative of certain activities. These rules can be handcrafted or learned from expert knowledge or data. Hidden Markov Models (HMM) or Dynamic Bayesian Networks (DBN): Employing probabilistic models that capture the sequential dependencies between observed features and the underlying activities. These models can represent temporal dynamics and transitions between different activity states.

Furthermore, once the activity models are established, the method involves recognizing or classifying activities in real-world scenes. This can be done by applying the trained models to the extracted features and making predictions or decisions based on the learned patterns or statistical models.

In an example, the activity in an industrial environment may be a process in manufacturing such as assembling, machining, machining, molding, or fabricating components to create finished products. In another example, the activity in an industrial environment may be an assembly activity such as joining of different components or parts to create a final product. This can include tasks such as fitting, fastening, soldering, or welding components together. In another example, the activity in an industrial environment maybe a quality control activity that focus on ensuring that products or components meet specified standards and quality requirements. This can involve activities such as product testing, inspection, measurement, or sampling to identify defects, faults, or deviations from the desired quality. In another example, the activity in an industrial environment may be material handling activities such as the movement, storage, and transportation of raw materials, components, or finished products within the industrial environment. This can include tasks such as loading, unloading, packaging, storage, or logistics management. In another example, the activity in the industrial environment may be equipment setup and calibration activities such as the installation, configuration, and calibration of machinery, instruments, or equipment in the industrial environment. This can include tasks such as equipment installation, parameter adjustment, alignment, or system configuration.

At step 306, each frame identified from scene is converted into metadata with a predefined schema. The term "metadata" as used herein refers to additional information or descriptive data that is associated with the processed data of the one or more scenes acquired from the visual data. The metadata provides context, properties, or details about the visual data of the clusters, which is then used for rendering the scene in the metaverse. The metadata maybe stored in the image file or in an accompanying file or database. In an example, the metadata may include, but not limited to, Exchangeable Image File Format (Exif) data containing information about the camera settings and capture conditions of the particular cluster such as camera make and model, exposure settings (shutter speed, aperture, ISO), date and time of capture, GPS coordinates, and focal length; visual data properties metadata includes information about the cluster size (width and height in pixels or inches), color space (e.g., RGB, CMYK), bit depth (8-bit, 16-bit, etc.), and file format (JPEG, PNG, TIFF, etc.); descriptive keywords or tags assigned to the entities/scene/frames that allow for easy categorization, organization, and retrieval of visual data based on specific attributes or content; editing, including the sequence of modifications, filters applied, and adjustments made, which can aid in understanding the cluster evolution; camera calibration data which provides information about the camera's lens distortion, intrinsic parameters, and extrinsic parameters; processing parameters if the scene has undergone specific image processing operations (e.g., contrast enhancement, noise reduction, sharpening), metadata can store the parameters used for those operations; image annotations such as cluster annotations, comments, or captions associated with the cluster, providing additional context or information about specific regions or features within the cluster; and geospatial information such as latitude, longitude, altitude, and sometimes orientation data. Advantageously, the metadata information that is transmitted is used for recreating the scene at the second site or remote site. Herein, metadata plays a crucial role in managing, organizing, and analyzing, and rendering large collections of images efficiently in the metaverse.

The metadata is encoded in the predefined schema that is then used for scene recreation. In an embodiment, the predefined schema of the metadata comprises a list of entities comprising at least one of: name of entity, type of entity, position coordinates of the entities, coordinates of joints of the entities, temporal activity of the entities, spatial placement of the entities, and relative placement of the entities with respect to other entities.

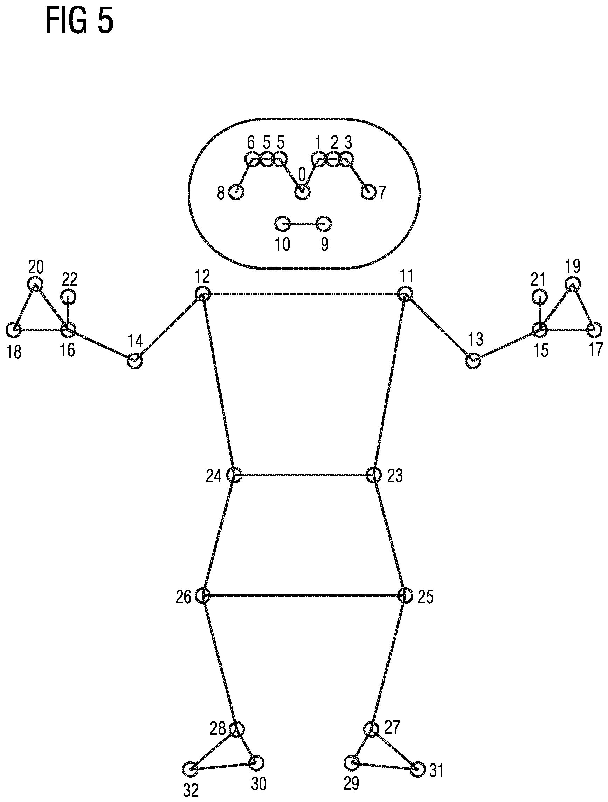

Referring to FIG 5, illustrated is a depiction of posture estimation of a person holding objects, in accordance with an embodiment of the present invention. A sample of metadata for the depiction in FIG 5 is as follows:

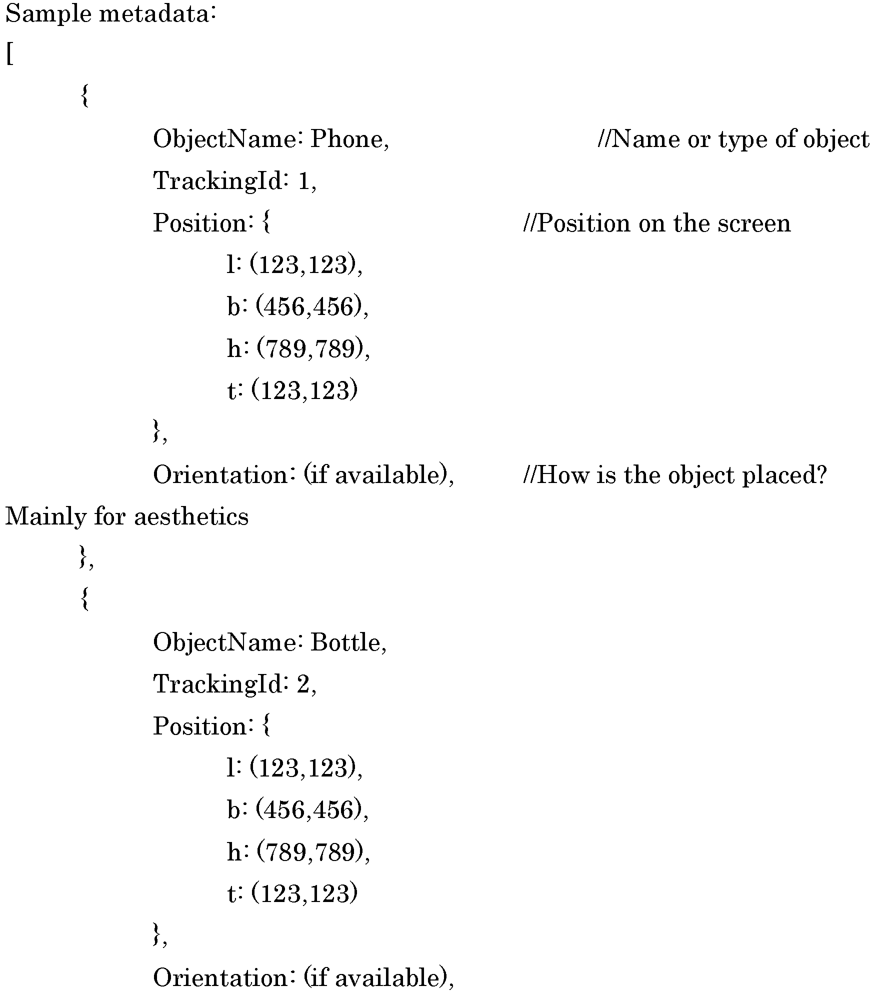

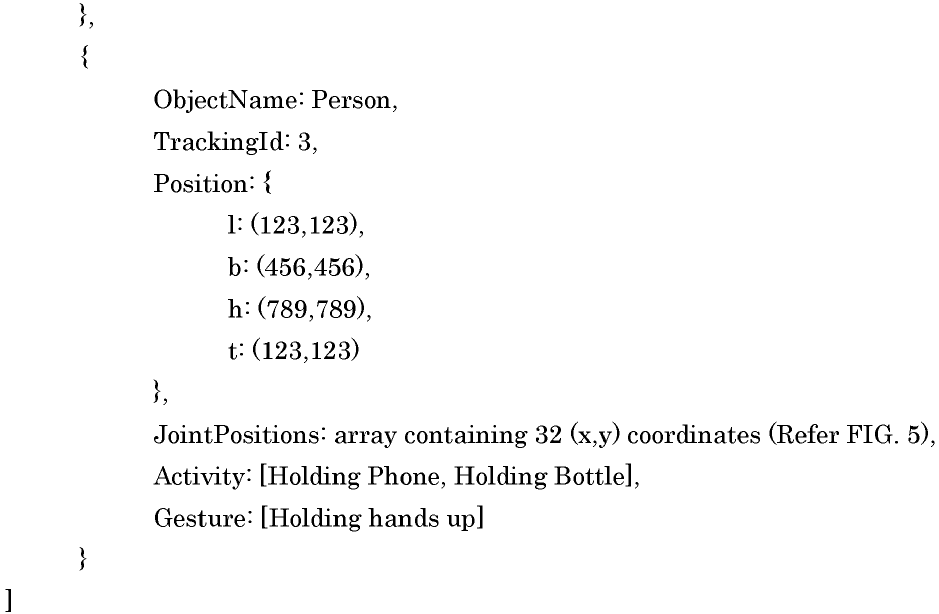

Furthermore, as shown in FIG. 5, the reference to the array of 32 coordinates is as below in Table 1:

**Table 1**

| Reference numeral in FIG 5 | Metadata (body joints) | Coordinates (x,y) |
|---|---|---|
| 0 | nose | (1.5, 1.7) |
| 1 | left-eye-inner | (1.2, 1.5) |
| 2 | left-eye | (1.4, 1.5) |
| 3 | left-eye-outer | (1.9, 1.5) |
| 4 | right-eye-inner | (1.8, 1.7) |
| 5 | right-eye | (1.6, 1.9) |
| 6 | right-eye_outer | (1.4, 1.5) |
| 7 | left-ear | (2, 2.5) |
| 8 | right_ear | (2, 2.8) |
| 9 | mouth-left | (1, 1.3) |
| 10 | mouth_right | (1, 1.2) |
| 11 | left-shoulder | (1.9, 1.5) |
| 12 | right_shoulder | (1.3, 1.5) |
| 13 | left-elbow | (1.2, 1.4) |
| 14 | right_elbow | (2, 1.4) |
| 15 | left-wrist | (2.1, 0.9) |
| 16 | right-wrist | (2.1, 0.8) |
| 17 | left-pinky | (1.5, 1.7) |
| 18 | right-pinky | (1.2, 1.5) |
| 19 | left-index | (1.4, 1.5) |
| 20 | right-index | (1.9, 1.5) |
| 21 | left-thumb | (1.8, 1.7) |
| 22 | right-thumb | (1.6, 1.9) |
| 23 | left-hip | (1.4, 1.5) |
| 24 | right-hip | (2, 2.5) |
| 25 | left-knee | (2, 2.8) |
| 26 | right-knee | (1, 1.3) |
| 27 | left_ankle | (1, 1.2) |
| 28 | right-ankle | (1.9, 1.5) |
| 29 | left-heel | (1.3, 1.5) |
| 30 | right-heel | (1.2, 1.4) |
| 31 | left-foot_index | (2, 1.4) |
| 32 | right-foot-index | (2.1, 0.9) |

Advantageously, size of the metadata is small and hence saves bandwidth during transmission. For example, the metadata is a JSON payload. The size comparison of metadata when compared with visual data is shown in Table 2 as an example to showcase that network utilization by each camera is significantly reduced, as an example by 90%.

**Table 2**

| Frame | Metadata | Whole Frame |
|---|---|---|
| 2 | 5.541 KB | 900.141 KB |
| 4 | 5.537 KB | 900.141 KB |
| 6 | 5.543 KB | 900.141 KB |
| 8 | 5.552 KB | 900.141 KB |
| 10 | 5.551 KB | 900.141 KB |
| 12 | 5.538 KB | 900.141 KB |
| 14 | 5.545 KB | 900.141 KB |
| 16 | 5.776 KB | 900.141 KB |
| 18 | 5.555 KB | 900.141 KB |
| 20 | 5.535 KB | 900.141 KB |
| 22 | 5.527 KB | 900.141 KB |
| 24 | 5.765 KB | 900.141 KB |
| 26 | 5.764 KB | 900.141 KB |
| 28 | 5.769 KB | 900.141 KB |
| 30 | 5.764 KB | 900.141 KB |
| 32 | 5.772 KB | 900.141 KB |
| 34 | 5.528 KB | 900.141 KB |
| 36 | 5.768 KB | 900.141 KB |
| 38 | 5.771 KB | 900.141 KB |
| 40 | 5.766 KB | 900.141 KB |

At step 308, relevant description is extracted from the metadata at the second site in order to render the scene frame-by-frame in the computer simulated environment. The metadata when received at the second site is analyzed by the apparatus in order to extract description of the scene. The extracted description is then used to recreate the scene at the second site in the computer simulated environment. In an embodiment, the relevant description from the metadata comprises at least one of: name of entities, type of entities, position coordinates of the entities, coordinates of joints of the entities, temporal activity of the entities, spatial placement of the entities, and relative placement of the entities with respect to other entities.

At step 310, one or more avatars are fetched from a database that are related to the extracted one or more entities in the frame based on the extracted metadata description. The metadata description includes information about the one or more entities such as name of entities, type of entities, position coordinates of the entities, coordinates of joints of the entities, temporal activity of the entities, spatial placement of the entities, and relative placement of the entities with respect to other entities. The description is then used to generate queries to extract one or more avatars from the database that are related to the one or more entities. In an embodiment, the method of fetching the one or more avatars from the database comprises fetching the one or more avatars from a local database based on a comparison of the extracted information from the metadata with the one or more avatars stored in the local database, when a comparison value is above a threshold. In an embodiment, the method of fetching the one or more avatars from a public database based on a comparison of the extracted information from the metadata with the one or more avatars stored in the local database, when a comparison value is below a threshold. It is to be understood that the local database stores one or more avatars that are similar to one or more entities in the industrial environment. In a case when the avatars similar to the entities are available in the local database, the avatars are fetched and processed for rendering. In another case, when the avatars similar to the entities are not available in the local, then an external or public database is pinged or queried to fetch the one or more avatars.

At step 312, the one or more scenes are rendered in the computer simulated environment at the second site based on the fetched avatars from the database. In an embodiment, the method of rendering the one or more scenes comprises defining orientation of each of the one or more avatars based on the metadata description. The orientation of the image is extracted from the metadata description. The orientation of an avatar refers to the way the avatar is displayed or viewed, typically determined by its rotation relative to its standard position. It can be described in terms of its alignment along horizontal and vertical axes. The orientation can be portrait orientation, landscape orientation, square orientation, rotated orientation, etc. In an embodiment, the method of rendering the one or more scenes in the computer simulated environment comprises improving aspect ratio of the one or more avatars as per requirements of the user. The aspect ratio of an image is the proportional relationship between its width and height. It is expressed as a ratio of two numbers, usually in the form W:HW:HW:H, where WWW represents the width and HHH represents the height. Improving the aspect ratio typically involves adjusting the image to fit a desired proportion without distorting important content. Example method of improving the aspect ratio includes cropping the avatars, resizing the avatars, padding the avatars etc.

In an embodiment, the method of rendering the one or more scenes comprises generating an animation of the one or more avatars based on the extracted metadata description using a generative artificial neural network. It should be understood that once avatars are fetched form the database, the avatars are to be rendered in the computer simulated environment along with the activity being performed. The metadata description of each avatar in the metaverse is synchronized frame-by-frame to generate animated scenes in the second site. The method of rendering further comprises employed the generative artificial intelligence algorithm to generate animations of the one or more avatars based on the metadata description of the entities frame-by-frame. The generative artificial intelligence algorithms for generating animations create new images based on learned patterns and structures from training data. The most prominent and widely used generative AI algorithms for image generation include Generative Adversarial Networks (GANs), Variational Autoencoders (VAEs), and Diffusion Models.

In an embodiment, the method of rendering the one or more scenes further comprises determining a future state of avatars in the identified scene based on the present state of objects as extracted from the received metadata at the second site. Herein, the future state of avatars is obtained based on a predefined activity flow in the industrial environment. The future state of the entity can be understood as a next state of obvious activity to be performed by the entity. For example, a future state for an object such as a robotic arm placing a box on the conveyor belt would be that the box has moved from X1, Y1 coordinates to X2, Y2 coordinates in the defined space such as the conveyor belt. The method further comprises generating an animation of the one or more avatars for the future state using the generative artificial neural network. The method further comprises rendering the one or more scenes based on the generated animation.

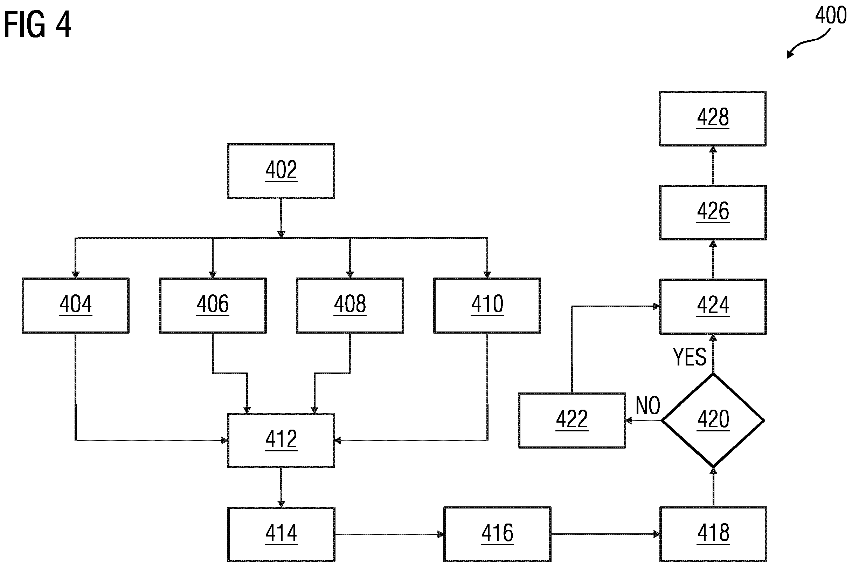

FIG 4 is a is an exemplary method workflow 400 for efficiently rendering one or more scenes in a computer simulated environment, according to an embodiment of the present invention. At step 402, visual data is received from the one or more data acquisition devices. The visual data comprises the one or more entities from the first site in the industrial environment. At step 404, the visual data is analyzed using pose estimation algorithms. At step 406, the visual data is analyzed using object detection algorithms. At step 408, the visual data is analyzed using activity recognition algorithms. At step 410, the visual data is analyzed using tracking algorithms. It will be appreciated that each of the steps 404, 406, 408, and 410 are performed parallelly one edge devices at the first site. Further, at step 412, the output of each of the steps 404, 406, 408, and 410 is synchronized to determine the one or more entities in the visual data frame-by-frame along with their position, state and activity. At step 414, the synchronized data from step 412 is converted into metadata with a predefined schema. In an example, the metadata is generated as a JSON payload. At step 416, the metadata is transmitted to second site such as remote locations for virtually viewing activities in the industrial environment. At step 418, the metadata is received the second site and then metadata descriptions are extracted from the received metadata. The one or more entities are extracted from the JSON payload. At step 418, the one or more entities extracted from the metadata are then compared with a local database to fetch one or more avatars related to the one or more entities. In case the one or more entities are not available in the local database, then the one or more avatars are fetched from the public database at step 422. Once, the one or more avatars are fetched from either of the databases, the avatars are processed to change aspect ratio, or orientation of the images if needed at step 424. At step 426, the one or more scenes are recreated using the one or more avatars and the metadata description. At 428, the one or more scenes are rendered in the AR/VR environment or the metaverse.

Advantageously, the present invention provides a secure and efficient system for efficiently rendering one or more scenes in a computer simulated environment from a first site to a second site in an industrial environment. Beneficially, the abovementioned method and system ensures that surveillance of factory floors is continued and reliable even during intermittent connectivity. The current invention ensures that there is no scope of packet drop during transmission of critical data to a remote location. Furthermore, the present invention enables seamless and reliable communication of surveillance data from one site to another. Advantageously, the present invention also enables transmission of visual data in low bandwidth environments. It will be appreciated that the transmission of JSON payload from one location to another conserves bandwidth and energy during transmission as the size of the JSON payload is negligible (reduced by approximately 95%) when compared to the visual data frame by frame.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102: data acquisition devices
- 104: industrial environment
- 105-1 to 105-N: one or more entities
- 106: computer simulated environment
- 108-1 to 108-N one or more: one or more avatars
- 110: apparatus
- 112: communication network
- 114: database
- 202: one or more processing units
- 204: memory unit
- 206: module
- 208: data acquisition module
- 210: scene identification module
- 212: metadata generation module
- 214: description extraction module
- 216: avatar fetching module
- 218: rendering module
- 217: storage unit
- 220: database
- 222: input unit
- 224: output unit
- 226: bus
- 300: flowchart depicting steps of a method for rendering one or more scenes in a computer simulated environment from a first site to a second site in an industrial environment
- 400: exemplary method workflow for efficiently rendering one or more scenes in a computer simulated environment
- 500: depiction of posture estimation of a person holding objects

## Claims

1. A method (300) for efficiently rendering one or more scenes in a computer simulated environment (106) from a first site to a second site in an industrial environment (104), the method comprising:
receiving, by a processing unit (202), visual data from one or more data acquisition devices (102) arranged at the first site, wherein the data acquisition devices are configured to acquire data pertaining to one or more entities (105-1 to 105-N) interacting in the industrial environment (104);
identifying, by the processing unit (202), a real-world scene from the industrial environment (104) in real-time frame-by-frame, wherein the real-world scene is identified using one or more machine learning models on the received visual data;
converting, by the processing unit (202), each frame identified from scene into metadata with a predefined schema and transmitting the metadata to the second site;
extracting, by the processing unit (202), relevant description from the metadata at the second site in order to render the scene frame-by-frame in the computer simulated environment (106),
fetching, by the processing unit (202), one or more avatars (108-1 to 108-N) from a database (114) that are related to the extracted one or more entities (105-1 to 105-N) in the frame based on the extracted metadata description; and
rendering, by the processing unit (202), the one or more scenes in the computer simulated environment (106) at the second site based on the fetched avatars (108-1 to 108-N) from the database (114).

2. A method (300) according to claim 1, wherein the predefined schema of the metadata comprises a list entities comprising at least one of: name of entities, type of entities, position coordinates of the entities, coordinates of joints of the entities, temporal activity of the entities, spatial placement of the entities, and relative placement of the entities with respect to other entities.

3. A method (300) according to claim 1, wherein the relevant description from the metadata comprises at least one of: name of entities, type of entities, position coordinates of the entities, coordinates of joints of the entities, temporal activity of the entities, spatial placement of the entities, and relative placement of the objects with respect to other entities.

4. A method (300) according to any of the preceding claims, wherein fetching the one or more avatars (108-1 to 108-N) from the database (114) comprises:
fetching, by the processing unit (202), the one or more avatars (108-1 to 108-N) from a local database based on a comparison of the extracted information from the metadata with the one or more avatars 108-1 to 108-N stored in the local database, when a comparison value is above a threshold; and
fetching, by the processing unit (202), the one or more avatars (108-1 to 108-N) from a public database based on a comparison of the extracted information from the metadata with the one or more avatars stored in the local database, when a comparison value is below a threshold.

5. A method (300) according to any of the preceding claims, wherein rendering the one or more scenes defining orientation of each of the one or more avatars (108-1 to 108-N) based on the metadata description.

6. A method (300) according to any of the preceding claims, wherein rendering the one or more scenes in the computer simulated environment (106) comprises improving aspect ratio of the one or more avatars (108-1 to 108-N) as per requirements of the user.

7. The method (300) according to any of the preceding claims, wherein rendering the one or more scenes comprises generating an animation of the one or more avatars (108-1 to 108-N) based on the extracted metadata description using a generative artificial neural network.

8. The method (300) according to claim any of the preceding claims, wherein rendering the one or more scenes further comprises:
determining, by the processing unit (202), a future state of avatars (108-1 to 108-N) in the identified scene based on the present state of entities as extracted from the received metadata at the second site, wherein the future state of avatars is obtained based on a predefined activity flow in the industrial environment;
generating, by the processing unit (202), an animation of the one or more avatars (108-1 to 108-N) for the future state using the generative artificial neural network;
rendering, by the processing unit (202), the one or more scenes based on the generated animation.

9. An apparatus (110) for efficiently rendering one or more scenes in a computer simulated environment (106) from a first site to a second site in an industrial environment (104), the apparatus comprising:
one or more processing units (202); and
a memory (204) communicatively coupled to the one or more processing units (202), the memory (204) comprising a module (206) stored in the form of machine-readable instructions executable by the one or more processing units (202), wherein the module is configured to perform the method (300) steps according to claims 1 to 8.

10. A system (100) for efficiently rendering one or more scenes in a computer simulated environment (106) from a first site to a second site in an industrial environment (104), the system comprising:
one or more data acquisition devices (102) arranged at a first site in the industrial environment (104), wherein the one or more data acquisition devices are configured for acquiring visual data of one or more entities (105-1 to 105-N) from the first site;
a computer simulated environment (106) configured for rendering one or more avatars (108-1 to 108-N) recreated from the visual data received from the one or more data acquisition devices at a second site; and
an apparatus (110) according to claim 8, communicatively coupled to the industrial environment (104), the computer simulated environment (106), and a database (114) via a communication network (112) wherein the wherein the apparatus (110) is configured for efficiently rendering one or more scenes in a computer simulated environment, according to any of the method claims 1 to 8.

11. A computer-program product, having computer-readable instructions stored therein, that when executed by a processing unit (202), cause the processing unit (202) to perform method (300) steps according to any of the claims 1 to 8.

12. A computer readable medium on which program code sections of a computer program are saved, the program code sections being loadable into and/or executable in a system to make the system execute the method steps according to any of the claims 1 to 8 when the program code sections are executed in the system (100).
